# EUROPÄISCHE PATENTSCHRIFT

(11) **EP 2 199 248 B1**
(45) Veröffentlichungstag und Bekanntmachung des Hinweises auf die Patenterteilung: **30.05.2012**
(21) Anmeldenummer: 09015113.5
(22) Anmeldetag: 07.12.2009
(51) Int. Cl.: B66F 9/07, G06Q 10/00, G05D 1/02, B66F 9/075, B65G 1/04, B66F 9/14

(54) **Verfahren zum Betreiben einer Förderanlage**
Method for operating a conveyor system.
Méthode pour opérer une installation de convoyage.

(30) Priorität: 19.12.2008 DE 102008064533
(43) Veröffentlichungstag der Anmeldung: 23.06.2010
(73) Patentinhaber: viastore systems GmbH, 70469 Stuttgart (DE)
(72) Erfinder: Hahn-Woernle, Christoph, 70173 Stuttgart (DE)
(74) Vertreter: Patentanwälte Ruff, Wilhelm, Beier, Dauster & Partner

(56) Entgegenhaltungen:
- EP-A1- 1 627 830
- WO-A2-2007/149703
- DE-A1-102006 049 411
- JP-A- 5 132 300
- US-A1- 2003 225 554
- US-A1- 2006 051 187

## Beschreibung

Die Erfindung betrifft ein Verfahren zum Betreiben einer Förderanlage mit einem Regalbediengerät, das ein Lastaufnahmemittel aufweist.

Aus der europäischen Offenlegungsschrift EP 1 627 830 A1 ist ein System und ein Verfahren zum Betreiben eines Hochregallagers bekannt. Um einen Speicherplatz in dem Hochregallager möglichst gut ausnutzen zu können, ist die Steuerung des Hochregallagers mit einem Speicher versehen, in dem die geometrischen Abmessungen des in dem Hochregallager verfügbaren Speicherplatzes gespeichert sind. Beim Einlagern von Gegenständen wird eine Größe des einzulagernden Gegenstandes erfasst und dieser wird dann an eine mittels der Steuerung ermittelte optimale Position abgelegt. Auf diese Weise können beispielsweise mehrere Gegenstände übereinander an ein und demselben Regalplatz abgelegt werden, so dass auf diese Weise der verfügbare Lagerplatz optimal genutzt wird.

Aus der japanischen Patentzusammenfassung JP 05132300 ist ein Regallager bekannt, das mittels eines von einem Bediener gesteuerten Gabelstaplers befüllt und entleert wird. Um die Arbeit des Bedieners zu erleichtern, ist eine Steuereinheit vorgesehen, die zum einen dem Bediener auf einer Anzeige eine Zieladresse für das Einlagern vorgibt und zum anderen die von dem Gabelstapler zurückgelegten Wege abspeichert. Auf diese Weise kann das Ein- und Auslagern von Gegenständen in das Regallager optimiert werden.

Aus der Offenlegungsschrift US 2006/0051187 A1 ist ein Kommissionierregal bekannt, das Lagerplätze für maximal vier hintereinander angeordnete Lagergutbehälter aufweist. Ein Kommissionierer entnimmt aus dem Regal Lagergutbehälter und setzt diese auf gegenüber dem Regal angeordnete Paletten um.

Aus der internationalen Offenlegungsschrift WO 2007/149703 A2 ist ein vollautomatisches Regallager bekannt. Beim Transportieren von Lagergut erhält eine Steuereinheit eine Fahranfrage von einer mobilen Fahreinheit, die ein Ziel innerhalb eines Arbeitsraums enthält. Die Steuereinheit stellt zunächst den Status der mobilen Fahreinheit fest und erzeugt einen Pfad zu dem Ziel für die mobile Fahreinheit. Der erzeugte Fahrpfad wird dann zu der mobilen Fahreinheit übertragen. Die Steuereinheit kann eine Vielzahl voneinander unabhängiger Fahreinheiten steuern und ist in der Lage, die Verwendung von Lagerraum und Ausrüstung zu optimieren.

Aus der deutschen Offenlegungsschrift DE 10 2006 049 411 A1 ist eine Vorrichtung zum Transportieren von Behältern in einem Hochregallager bekannt. Die Regalfächer der Lagerregale des Hochregallagers sind mehrfach tief. Zwischen den Lagerregalen fährt ein Regalbediengerät, das eine Hubplattform aufweist, auf der eine Transfereinheit und eine zusätzlich Hubeinrichtung angeordnet sind. Die zusätzliche Hubeinrichtung umfasst eine Mehrzahl von individuell steuerbaren. Hubeinheiten, deren Maße auf das Basisraster der Behälter abgestimmt sind. Die zusätzliche Hubeinrichtung ist höher als die maximale Höhe der Behälter. Außerdem besitzt die Hubplattform wenigstens einen Querförderer, der die nicht angehobenen Behälter von Hubeinheit zu Hubeinheit verschiebt. Dadurch können die Behälter auf dem Regalbediengerät selbst sortiert werden, indem ihre Reihenfolge verändert wird. Das Regalbediengerät hat vier Hubplätze, so dass es möglich ist, vier Behälter gleichzeitig auf das Regalbediengerät zu übernehmen und diese dann auf dem Regalbediengerät zu sortieren. Das auf diese Weise speziell ausgebildete Regalbediengerät dient dazu, das sogenannte Umlagern im Regal zu vermeiden, bei dem die Behälter in freien Regalfächern zwischengeparkt werden.

Mit der Erfindung soll ein Verfahren zum Betreiben einer Förderanlage bereitgestellt werden, das flexibel einsetzbar und zuverlässig realisierbar ist.

Das der Erfindung zugrundeliegende Problem wird durch ein Verfahren zum Betreiben einer Förderanlage mit einem Regalbediengerät, wobei das Regalbediengerät ein Lastaufnahmemittel zum Aufnehmen und Abgeben von Lagergutbehältern aufweist, und einem Regal mit wenigstens zwei in Einlager- beziehungsweise Auslagerrichtung hintereinander angeordneten Lagerplätzen gelöst, bei dem das Einlagern, Umlagern und Auslagern von Lagergutbehältern als voneinander getrennte Teilprozesse behandelt werden und für jeden dieser Teilprozesse separate Prozessabläufe vorgebbar sind.

Durch diese Aufteilung eines Betriebs des Regalbediengeräts in drei Teilprozesse, nämlich Einlagern, Umlagern und Auslagern, lässt sich eine Förderanlage nicht nur äußerst flexibel betreiben, sondern es sind auch zahlreiche Optimierungen der einzelnen Teilprozesse möglich. Speziell können je nach der von der Förderanlage zu lösenden, anstehenden Aufgabe, unterschiedliche Strategien für das Einlagern, Umlagern beziehungsweise Auslagern eingesetzt werden. Die Förderanlage kann dadurch auch unterschiedlichste, anstehende Aufgaben jeweils optimal lösen. Es kann dabei vorgesehen sein, die Teilprozesse zeitlich gesehen teilweise überlappen zu lassen oder streng getrennt voneinander abzuarbeiten.

In Weiterbildung der Erfindung werden beim Einlagern Einlagerplätze gewählt, die die kürzeste Entfernung von einem Referenzpunkt aufweisen, wobei der Referenzpunkt wahlweise im Bereich eines Einlager-übergabeplatzes oder am Regalbediengerät angeordnet ist.

Eine solche Einlagerstrategie wird auch als Radarstrategie bezeichnet und kann in der Regel ein möglichst schnelles Einlagern von Lagergut sicherstellen. Ein sehr flexibler Einsatz wird dadurch erreicht, dass als Referenzpunkt wahlweise ein Einlagerübergabeplatz oder Einlagerstich oder der aktuelle Standort des Regalbediengeräts gewählt werden kann. Befinden sich beispielsweise zwei Lagergutbehälter auf dem Regalbediengerät und wurde zunächst ein erstes Lagergut ausgelagert, so kann ausgehend von dem aktuellen Standort des Regalbediengeräts ein möglichst naher Einlagerplatz ausfindig gemacht werden, um die anstehende Einlageraufgabe möglichst schnell zu erledigen.

In Weiterbildung der Erfindung wird beim Einlagern mehrerer, sich gleichzeitig auf dem Lastaufnahmemittel befindlicher Lagergutbehälter zunächst nach einem Lagerfach gesucht, das Platz für alle Lagergutbehälter gemeinsam bietet, dann nach Lagerplätzen, die für jeweils gleich hohe Lagergutbehälter einen gemeinsamen Lagerplatz bieten und zuletzt nach Einzellagerplätzen für die Lagergutbehälter.

Auf diese Weise können Bewegungen des Regalbediengeräts minimiert werden. Bevorzugt wird das Einlagern aller auf dem Lastaufnahmemittel befindlicher Lagergutbehälter gemeinsam. Ist ein solches Lagerfach nicht verfügbar, so wird nach Lagerfächern gesucht, die alle Lagergutbehälter einer Höhenklasse gleichzeitig aufnehmen können.

In Weiterbildung der Erfindung erfolgt die Suche nach einem Lagerplatz für alle auf dem Lastaufnahmemittel befindlichen Lagergutbehälter nach Regalseiten getrennt.

Ein solches Vorgehen hat sich vor allem dann bewährt, wenn beispielsweise bereits auf der Regalseite gesucht wird, auf der sich die Lagergutbehälter einer gemeinsamen Höhenklasse auf dem Lastaufnahmemittel befinden. Tritt eine Überkreuzsituation auf, wird die Lagerplatzsuche auf der anderen Regalseite wiederholt. Ziel ist, ein Umlagern der Behälter auf dem Lastaufnahmemittel nach Möglichkeit zu vermeiden.

In Weiterbildung der Erfindung wird bei der Suche von Lagerplätzen eine Fahrtzeit des Regalbediengeräts vom Referenzpunkt zum Lagerplatz berücksichtigt.

Auf diese Weise kann das Anfahren von Lagerplätzen beschleunigt werden. Beispielsweise stehen zwei etwa gleich weit vom Referenzpunkt entfernte Lagerplätze zur Verfügung. Liegt der Referenzpunkt beispielsweise auf dem Regalbediengerät, kann es durchaus sein, dass die Fahrtzeit zum ersten Lagerplatz wesentlich länger ist, da dabei beispielsweise eine erhebliche Höhendifferenz überwunden werden muss. Der andere, an und für sich gleichweit entfernte Lagerplatz liegt auf gleicher Höhe wie der Referenzpunkt oder gar darunter. Ein solcher Lagerplatz kann dann schneller und mit geringerem Energieaufwand erreicht werden als der erste Lagerplatz und wird daher bevorzugt.

In Weiterbildung der Erfindung werden auf dem Regalbediengerät befindliche Lagergutbehälter gleicher Höhe auf der gleichen Regalseite abgesetzt.

Auf diese Weise kann bereits die Voraussetzung für ein schnelles, problemloses Auslagern geschaffen werden, wenn beispielsweise zu erwarten ist, dass Lagergutbehälter gleicher Höhe bevorzugt gleichzeitig ausgelagert werden. Die Anzahl der erforderlichen Umlagerungen kann dadurch verringert werden.

In Weiterbildung der Erfindung wird erst nach vollständigem Abschluss des Einlagerns ein eventuell erforderliches Umlagern durchgeführt.

In Weiterbildung der Erfindung werden alle Lagergutbehälter, die auszulagernde Lagergutbehälter im Regal verdecken, gemeinsam in ein leeres Regalfach umgelagert.

Auf diese Weise kann die für das notwendige Umlagern erforderliche Zeit verringert werden, da alle verdeckenden Lagergutbehälter gemeinsam aufgenommen und gemeinsam wieder in ein Regalfach eingestellt werden. Wenn ein entsprechendes Regalfach frei ist, ist dadurch lediglich eine Hin- und Rückfahrt des Regalbediengeräts zu dem Umlagerplatz erforderlich.

In Weiterbildung der Erfindung werden beim Umlagern Lagergutbehälter, die mehrere, in unterschiedlichen Regalfachkanälen angeordnete und auszulagernde Lagergutbehälter verdecken, zunächst gemeinsam auf das Lastaufnahmemittel aufgenommen und umgelagert, bevor die auszulagernden Lagergutbehälter gemeinsam auf das Lastaufnahmemittel aufgenommen werden.

Durch eine solche Bündelung der erforderlichen Umlagerung lässt sich die Anzahl der für das Umlagern und Auslagern erforderlichen Regalbediengerätbewegungen reduzieren.

In Weiterbildung der Erfindung werden beim Umlagern Lagergutbehälter, die auszulagernde Lagergutbehälter verdecken, so in Umlagerplätze eingelagert, dass ein für das Umlagern benutztes Regalfach vollständig gefüllt ist.

Auf diese Weise kann erreicht werden, dass möglichst viele Regalfächer vollständig frei bleiben und daher eventuelle noch anstehende Mehrfacheinlagerungen von Lagergutbehältern möglichst schnell erledigt werden können.

In Weiterbildung der Erfindung werden beim Umlagern Lagergutbehälter, die auszulagernde Lagergutbehälter verdecken, in Regalfächer eingelagert, die den jeweils geringsten Abstand vom Auslagerfach aufweisen.

Auf diese Weise lässt sich der für das Umlagern erforderliche Zeitaufwand minimieren.

In Weiterbildung der Erfindung werden beim Umlagern Lagergutbehälter, die auszulagernde Lagergutbehälter verdecken, und auszulagernde Lagergutbehälter gleichzeitig mit dem Lastaufnahmemittel aufgenommen, vorausgesetzt, dass auf der dem Auslagerplatz gegenüberliegenden Regalseite ein Regalfach zum gleichzeitigen Aufnehmen aller verdeckenden Lagergutbehälter frei ist.

Mittels einer solchen Strategie kann eine zusätzliche Bewegung des Regalbediengeräts für das Auslagern eingespart werden, da die verdeckenden Lagergutbehälter einfach gegenüber ihrem verdeckenden Lagerplatz in ein freies Regalfach eingeschoben werden und der auszulagernde Lagergutbehälter gleichzeitig aufgenommen wird. In diesem Fall liegt dann eine zeitliche Überlagerung der Teilprozesse Umlagern und Auslagern vor.

In Weiterbildung der Erfindung wird beim Auslagern zunächst ein von einem Referenzpunkt am weitesten entfernte Auslagerplatz angefahren und dann erfolgen in der Reihenfolge der Entfernung vom Referenzpunkt weitere Auslagerungen, wobei vom Referenzpunkt weiter entfernte Auslagerplätze zuerst angefahren werden.

Auf diese Weise lässt sich die beim Auslagern vom Regalbediengerät zurückzulegende Wegstrecke minimieren. Üblicherweise wird als erster Referenzpunkt der Auslagerstich verwendet, für nachfolgende Auslagerungen ist der jeweilige Referenzpunkt dann der jeweils aktuelle Standort des Regelbediengeräts.

In Weiterbildung der Erfindung werden beim Auslagern Auslagerplätze in einer zufälligen Reihenfolge angefahren.

In Weiterbildung der Erfindung wird beim Auslagern eine Fahrtzeit des Regalbediengeräts vom Referenzpunkt zu den einzelnen Auslagerplätzen und zwischen den Auslagerplätzen berücksichtigt.

Auf diese Weise kann eine Optimierung der Auslagerzeit erfolgen.

In Weiterbildung der Erfindung wird beim Auslagern eine feste, vorgegebene Reihenfolge der Auslagerungen abgearbeitet, wobei die feste Reihenfolge von einer Steuereinheit vorgegeben wird.

Auf diese Weise kann beispielsweise ein anstehender Auslagerungsauftrag exakt in einer vorgegebenen Reihenfolge abgearbeitet werden, so dass am Auslagerübergabeplatz der Auslagerungstisch kein weiteres Sortieren der ausgelagerten Behälter mehr erforderlich ist.

Weitere Merkmale und Vorteile der Erfindung ergeben sich auch aus den Ansprüchen und der nachfolgenden Beschreibung bevorzugter Ausführungsformen der Erfindung im Zusammenhang mit den Zeichnungen. Einzelmerkmale der unterschiedlichen, in den Zeichnungen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine schematische Darstellung eines Hochregallagers zur Ver- deutlichung einer Basisstrategie beim Einlagern in dem erfin- dungsgemäßen Verfahren,
- Fig. 2: eine schematische Darstellung eines Hochregallagers zum Ver- deutlichen einer Basisstrategie beim Umlagern in dem erfin- dungsgemäßen Verfahren,
- Fig. 3: eine schematische Darstellung eines Hochregallagers zur weite- ren Verdeutlichung der Basisstrategie beim Umlagern in dem er- findungsgemäßen Verfahren,
- Fig. 4: eine schematische Darstellung eines Hochregallagers zur Ver- deutlichung einer weiteren Strategie beim Umlagern in dem er- findungsgemäßen Verfahren und
- Fig. 5: eine schematische Darstellung eines Hochregallagers zur Ver- deutlichung einer Basisstrategie beim Auslagern in dem erfin- dungsgemäßen Verfahren.

Mit dem erfindungsgemäßen Verfahren soll eine zwei-/vierfachtiefe Einlagerung von Lagergutbehältern ermöglicht werden. Wahlweise soll das Verfahren ermöglichen, zweifachtiefe Regalfächer oder Regalkanäle, in denen also zwei Lagergutbehälter hintereinander angeordnet werden, vierfachtiefe Regalkanäle, in denen also vier Lagergutbehälter hintereinander angeordnet werden können, oder allgemein mehrfachtiefe Regalkanäle in optimaler Weise zu verwalten. Dies betrifft das Einlagern, das Umlagern und das Auslagern von Lagergutbehältern.

Speziell sollen minimale Wege, eine minimale Anzahl und eine optimale Reihenfolge der Regalbediengerätfahrten erzielt werden, was durch ein sogenanntes Doppelspiel, also die Kombination von Regalbediengerätfahrten, eine Wegeoptimierung zur Vermeidung von unnötigen und langen Regalbediengerätfahrten, eine Minimierung der Anzahl der erforderlichen Umlagerungen sowie eine Implementierung von ABC-Strategien, gleichbedeutend mit einer Priorisierung von Teilprozessen, erreicht wird.

Umlagerungen lassen sich zwangsläufig bei einer zwei/vierfachtiefen oder allgemein mehrfachtiefen Einlagerung von Lagergutbehältern nicht vermeiden, da es immer möglich ist, dass der tatsächlich zu entnehmende Lagergutbehälter von einem anderen Lagergutbehälter verdeckt wird. Bei dem erfindungsgemäßen Verfahren gilt generell, dass bei der Regalkanalbelegung die Bildung von artikelreinen oder typenreinen Kanälen in Bezug auf den Typ des Lagergutbehälters, also dass beispielsweise nur Lagergutbehälter einer bestimmten Höhe gemeinsam in einem Kanal stehen, nicht bevorzugt wird. Grundsätzlich dürfen sich jedoch keine verstellten freien Plätze innerhalb eines Regalkanals befinden. In einen leeren Regalkanal muss somit ein Lagergutbehälter immer auf den hintersten freien Platz eingelagert werden. Anderenfalls wäre die Regalkapazität nicht vollständig zu nutzen. Ist allerdings bekannt, dass die Lagerkapazität ohnehin nur teilweise genutzt werden muss, kann bei dem erfindungsgemäßen Verfahren in diesem speziellen Fall durchaus vorgesehen sein, dass wenigstens teilweise lediglich die vordersten Plätze der Regalfächer belegt werden, um ein schnelles Aus-und Einlagern zu erreichen.

Das erfindungsgemäße Verfahren sieht im Grundsatz die Zerlegung der Fahrtzyklen des Regalbediengeräts in Teilprozesse vor, nämlich die Teilprozesse des Einlagerns, Umlagerns und Auslagerns.

Betreffend das Einlagern erfolgt die Abgabe der Behälter im Regal - solange ausreichend freie Lagerfächer vorhanden sind - paarweise, in Tripeln oder Quadrupeln, in komplett freie Kanäle. Ist dies nicht möglich, werden für eine verteilte Einlagerung bis zu vier verschiedene Regalfächer angefahren. Hierfür werden bereits hinten belegte Regalfächer vorne aufgefüllt. Hierbei muss ein geeigneter Lagerplatz entsprechend des einzulagernden Behältertyps gesucht werden. Die Lagerplatzvergabe beim Einlagern und auch beim Umlagern erfolgt immer so, dass möglichst viele vollständig belegte Regalfächer vorhanden sind. Ist also beim Einlagern kein geeigneter Lagerplatz für den einzulagernden Behältertyp im vorderen Bereich eines Regalfachs vorhanden, wird der Behälter nach hinten in ein neues Regalfach eingelagert. Das erfindungsgemäße Verfahren sieht dabei auch sogenannte Optimierungsumlagerungen oder Verdichtungen vor, bei denen also während Zeiten, in denen das Lager nicht oder lediglich sporadisch genutzt wird, die Regalfächer wenigstens teilweise neu organisiert werden, so dass möglichst viele vollständig belegte Regalfächer vorhanden sind. Dies schafft in Zeiten des Hochbetriebs dann die Möglichkeit, Einlagerungen möglichst schnell vornehmen zu können.

Beim Auslagern muss bei der mehrfachtiefen Einlagerung gewährleistet sein, dass wahlfrei Zugriff auf die jeweils vorderen beziehungsweise hinteren Behälter möglich ist. Gegebenenfalls sind dabei folgende Aufgabenstellungen zu lösen:
Umlagerung des oder der vorderen Behälter bei Zugriff auf den oder die hinteren Behälter mit möglichst kurzer Umlagerzeit;
Paarbildung, Tripelbildung oder Quadrupelbildung bei der Auslagerung.

Im ungünstigsten Fall müssen vier Behälter ausgelagert werden, die jeweils von Behältern im Regal verdeckt sind. Dies kann sich aus der Lagerbelegung nach der einlageroptimierten Strategie ergeben, dass also möglichst viele vollständig belegte Regalfächer vorhanden sind. Dies bedeutet dann, dass für ein Lastaufnahmemittel am Regalbediengerät, das vier Lagergutbehälter aufnehmen kann, vier Auslagerungen und maximal drei Umlagerungen je Auslagerung ausgeführt werden müssen. Je Auslagerung für ein komplett mit vier Lagergutbehältern gefülltes Lastaufnahmemittel müssen im Extremfall damit 16 Fahrbefehle abgearbeitet werden, entsprechend vier Auslagerungen plus der maximal erforderlichen Anzahl von drei Umlagerungen je auszulagerndem Lagergutbehälter, insgesamt also vier Auslagerfahrbefehle und maximal zwölf Umlagerfahrbefehle.

In Bezug auf das gegebenenfalls erforderliche Umlagern sieht das erfindungsgemäße Verfahren eine Umlageroptimierung vor. Diese beinhaltet beim Umlagern die Suche nach einem dem Auslagerpunkt möglichst nahegelegenen Regalfach für die sogenannte Umlagerung des Verdeckers, also die Einlagerung des verdeckenden und umzulagernden Behälters.

Da das erfindungsgemäße Verfahren ohne weiteres auf Behälter unterschiedlicher Größe und/oder Höhe anwendbar ist, kann sich die Notwendigkeit der Kombination aus Auslagerung und Umlagerung von großen sowie von kleinen Behältern ergeben.

Gemäß dem erfindungsgemäßen Verfahren sind mehrere Strategien für die einzelnen Teilprozesse Einlagern, Umlagern und Auslagern vorgesehen. Dies ermöglicht es, eine Förderanlage und insbesondere ein Hochregallager mittels unterschiedlicher Strategien für die einzelnen Teilprozesse je nach den anstehenden, zu lösenden Aufgaben in optimaler Weise zu betreiben. Die unterschiedlichen Strategien können dabei unterschiedliche Zielsetzungen verfolgen, beispielsweise maximale Einlager- beziehungsweise Auslagergeschwindigkeit, optimale Lagerfachbelegung zum Erzielen eines maximalen Regalkapazität oder auch maximal mögliche Energieeffizienz und Materialschonung.

Generell werden daher die Ein-, Um- und Auslagerungen getrennt abgearbeitet. Auf den Einlagerstichen dürfen keine Lücken entstehen. In den Regalkanälen dürfen ebenfalls keine Lücken erzeugt werden. Gegebenenfalls müssen Behälterhöhen beachtet werden und eine Fahrauftragspriorisierung muss gegebenenfalls möglich sein.

Bei der Einlagerung werden im Rahmen einer Basisstrategie Regalfächer im Regal entsprechend der Anzahl der einzulagernden Lagergutbehälter gesucht. Bei der Basisstrategie wird dabei nach der kürzest möglichen Entfernung des potentiellen Einlagerfaches zu einem Referenzpunkt gesucht. Dies wird als Radarsuche bezeichnet. Der Referenzpunkt kann dabei entweder an einem Einlager-/Auslagerpunkt oder Einlager-/Auslagerstich des Regals, also an einem räumlich fixierten Punkt liegen. Der Referenzpunkt kann aber beispielsweise auch am Regalbediengerät selbst liegen und ist damit in der Lagergasse verschiebbar.

Sollen beispielsweise im Regal die Behälter nach Behälterhöhen sortiert eingelagert werden und haben alle einzulagernden Behälter auf dem Lastaufnahmemittel die gleiche Höhenklasse, und entspricht darüber hinaus die Anzahl der einzulagernden Behälter der Anzahl der Lagerplätze in einem Regalkanal, bei vierfachtiefer Einlagerung also vier Behälter, so wird zunächst nach einem komplett leeren Regalkanal gesucht. Ist kein komplett leerer Regalkanal verfügbar, wird die Suche auf teilweise belegte Regalkanäle ausgedehnt. Dabei wird zunächst nach Regalkanälen mit noch drei freien Plätzen gesucht, in die also ein Tripel zugelagert werden kann, und danach wird nach Regalkanälen gesucht, die in die noch zwei zusätzliche Lagergutbehälter eingelagert werden können, also ein sogenanntes Tupel. Erst wenn die Suche nach Regalkanälen mit mehr als einem freien Lagerplatz ergebnislos verläuft, wird nach einzelnen freien Lagerplätzen gesucht.

Befinden sich auf dem Lastaufnahmemittel des Regalbediengeräts Behälter unterschiedlicher Höhe, so wird dann, wenn eine nach Behälterhöhen sortierte Einlagerung gewünscht ist, zunächst nach Regalkanälen gesucht, die alle Behälter einer Behälterhöhengruppe gleichzeitig aufnehmen können. Für die Behälterhöhengruppen wird dabei jeweils auf einer rechten und auf einer linken Regalseite nach einem passenden Regalfach gesucht. Sollten die Lagergutbehälter der unterschiedlichen Behälterhöhengruppen dabei so auf dem Lastaufnahmemittel angeordnet sein, dass sich beim Auslagern eine Überkreuzsituation ergeben würde, dass also beispielsweise drei niedrige Behälter rechts auf dem Lastaufnahmegerät angeordnet sind und ein hoher Behälter links auf dem Lastaufnahmegerät und wenn dann auf der linken Seite des Regals ein Lagerfach für die gleichzeitige Einlagerung aller drei niedrigen Behälter gefunden wird, so wird zunächst auf der rechten Regalseite nach einem passendem Regalfach gesucht, um nach Möglichkeit eine Umlagerung zu vermeiden. Eine Umlagerung lässt sich aber beispielsweise auch dadurch vermeiden, dass dann auch der links angeordnete hohe Lagergutbehälter zunächst auf der linken Seite des Regals eingelagert wird und dann alle drei niedrigen Behälter gemeinsam in den geeigneten Regalkanal eingelagert werden.

Gemäß der bereits erörterten Basisstrategie mit der sogenannten Radarsuche wird dabei unter mehreren möglichen Lagerfächern zur Einlagerung der Behälterhöhengruppen so ausgewählt, dass sich das optimale Lagerfach möglichst nahe am Referenzpunkt befindet.

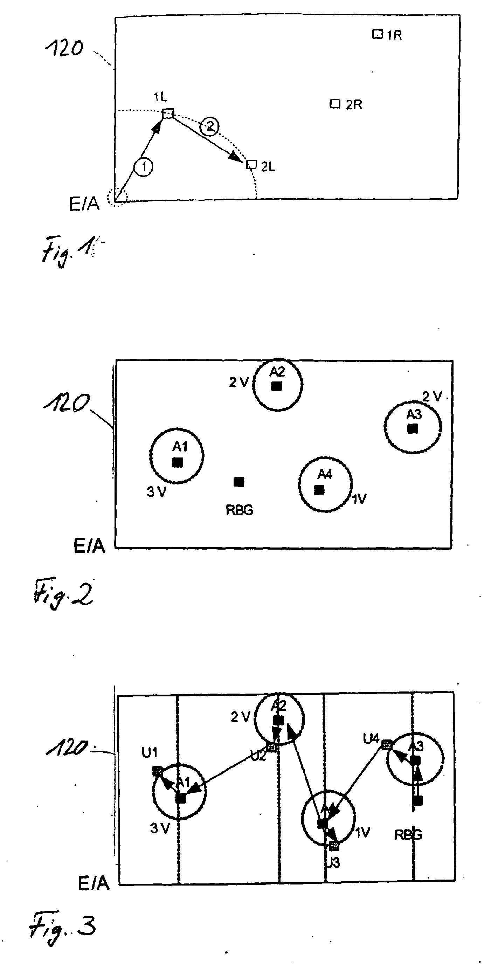

Die schematische Darstellung der Fig. 1 zeigt ein rechteckförmig dargestelltes Hochregallager 120 in einer Seitenansicht. Das dargestellte Rechteck entspricht also den Abmessungen einer Lagergasse in der sich ein Regalbediengerät in Hochrichtung und in Längsrichtung, also auf der Zeichenebene, bewegen kann. Ein Referenzpunkt wird bei dem dargestellten Fall am Einlagerübergabepunkt E/A gewählt, also in der linken unteren Ecke des Hochregallagers 120. Die bereits durchgeführte Suche nach freien Lagerplätzen hat einen freien Regalplatz auf der linken Seite, bezeichnet mit 1 L, zwei freie Lagerplätze auf der linken Seite, bezeichnet mit 2L, sowie einen freien Lagerplatz auf der rechten Seite, bezeichnet mit 1 R sowie zwei weitere freie Lagerplätze auf der rechten Regalseite, bezeichnet mit 2R, ergeben. Insgesamt sollen drei Lagergutbehälter eingelagert werden. Bei der Basisstrategie für die Einlagerung werden die freien Lagerplätze nach der kürzest möglichen Entfernung zum Referenzpunkt ausgesucht. Zunächst fährt das Regalbediengerät also gemäß dem Pfeil 1 zum Lagerplatz 1 L und danach gemäß dem Pfeil 2 zum Lagerplatz 2L. Die Lagerplätze 1 R und 2R werden nicht berücksichtigt, da sie weiter vom Referenzpunkt entfernt sind als die Lagerplätze 1 L, 2L.

Eine weitere Einlagerstrategie besteht darin, Einlagerungen mit wechselndem Referenzpunkt vorzunehmen. Ein Referenzpunkt ist dann immer der Ort des Regalfaches der letzten Einlagerung. Wird beispielsweise ein erster Lagergutbehälter eingelagert, so wird für die weiteren auf dem Lastaufnahmemittel befindlichen Lagergutbehälter dann ausgehend von dem Ort der ersten Einlagerung nach dem nächsten freien Lagerplatz in der kürzesten Entfernung gesucht.

Bei einer weiteren Einlagerstrategie wird nicht nach der kürzesten Entfernung der zur Verfügung stehenden freien Lagerplätze, sondern nach der kürzesten Fahrzeit zu diesen freien Lagerplätzen ausgewählt. Damit wird der Fahrdynamik des Regalbediengeräts Rechnung getragen. Ist beispielsweise zwischen zwei freien Lagerplätzen zu entscheiden und liegt ein erster freier Lagerplatz in kurzer Entfernung aber sehr großer Höhendistanz zum aktuellen Referenzpunkt, wohingegen der zweite freie Lagerplatz zwar weiter vom Referenzpunkt entfernt ist als der erste Lagerplatz, eine Höhendifferenz aber wesentlich geringer, null oder gar negativ zum Referenzpunkt ist, so ist eine Fahrtzeit zum zweiten Lagerplatz kürzer als zum ersten Lagerplatz, da keine oder deutlich weniger potentielle Energie aufgebracht werden muss, um das Regalbediengerät und den Lagergutbehälter über die Höhendistanz zu transportieren. Ausgewählt würde damit der zweite freie Lagerplatz, da dieser eine kürzere Fahrtzeit des Regalbediengeräts ermöglicht.

Eine der beschriebenen Berücksichtigung der Fahrdynamik ähnliche Strategie kann bei Berücksichtigung einer Energieaufnahme erreicht werden. Beispielsweise kann ein Strategieziel eine möglichst geringe Energieaufnahme sein und auch in diesem Fall würde dann die Entscheidung auf freie Lagerplätze fallen, die in möglichst geringer Höhendistanz zum aktuellen Referenzpunkt liegen oder die sogar unterhalb des Referenzpunktes liegen und somit ohne wesentliche oder mit der geringst möglichen Energieaufnahme erreicht werden können.

Eine weitere Einlagerstrategie besteht darin, die Einlagerzeiten zu minimieren, wenn nach Behälterhöhen sortiert eingelagert werden soll. Dabei wird versucht, Lagergutbehälter einer Höhengruppe auf der Seite des Regals einzulagern, auf der sie sich bereits auf dem Lastaufnahmemittel befinden. Es wurde vorstehend bereits erörtert, dass beispielsweise versucht wird, einen hohen, links außen auf dem Lastaufnahmemittel befindlichen Behälter in die linke Regalseite einzulagern und drei niedrige, rechts von dem hohen Lagergutbehälter auf dem Lastaufnahmemittel befindliche Behälter in die rechte Regalseite einzulagern.

Wie bereits beschrieben wurde, kann bei mehrfachtiefer Einlagerung das Umlagern von verdeckenden Lagergutbehältern erforderlich sein.

Eine Basisstrategie bei der Umlagerung sieht vor, alle verdeckenden Lagergutbehälter gemeinsam in einen leeren Regalkanal einzulagern. Pro Auslagerfach kann es dadurch erforderlich sein, für einen bis drei verdeckende Behälter ein Umlagerziel zu suchen. Die Zielfachsuche erfolgt dabei auf beiden Regalseiten und soll immer in ein komplett leeres Kanalfach erfolgen. Jede Umlagerung wird dabei separat bearbeitet.

Dadurch, dass alle verdeckenden Lagergutbehälter eines Auslagerfachs gleichzeitig in einen leeren Regalkanal abgegeben werden sollen, kann auch der Fall eintreten, dass die Umlagerung erst in weiter Entfernung zum Auslagerfach erfolgen kann. Ein Referenzpunkt für die Regalfachsuche beim Umlagern wird dabei immer so gewählt, dass der Referenzpunkt das jeweilige Auslagerfach darstellt, aus dem die verdeckenden Lagergutbehälter entnommen werden.

Anhand der schematischen Darstellung der Fig. 2 soll eine Umlagerung erläutert werden. Innerhalb des Hochregallagers 20 befindet sich ein Regalbediengerät RBG, und insgesamt sollen vier Lagergutbehälter A1, A2, A3 und A4 ausgelagert werden. Der Lagergutbehälter A1 ist von drei Lagergutbehältern verdeckt, was mit 3V bezeichnet ist. Der Lagergutbehälter A2 ist von zwei Lagergutbehältern verdeckt, was mit 2V bezeichnet ist. Der Lagergutbehälter A3 ist ebenfalls von zwei Lagergutbehältern verdeckt, bezeichnet mit 2V und der Lagergutbehälter A4 ist von einem Lagergutbehälter 1V verdeckt.

Ausgehend von dieser Situation gemäß Fig. 2 wird gemäß dem erfindungsgemäßen Verfahren das in Fig. 3 skizzierte Vorgehen gewählt. Wie bereits erörtert wurde, werden zunächst sämtliche erforderlichen Umlagerungen ausgeführt und erst dann werden die Lagergutbehälter A1, A2, A3 und A4 auf einer gemeinsamen Auslagerfahrt aufgenommen.

Die erste Umlagerung wird dort vorgenommen, wo die kürzeste Entfernung zum Referenzpunkt E/A vorliegt. In diesem Fall ist dies die beim Lagergutbehälter A1 erforderliche Umlagerung von drei verdeckenden Lagergutbehältern. Wie bereits erörtert wurde, kann alternativ auch der Referenzpunkt am Standort des Regalbediengeräts RBG gewählt werden. Bei der in Fig. 2 dargestellten Ausgangssituation würde dabei aber ebenfalls die erste Umlagerung am Lagergutbehälter A1 erfolgen.

Wie in Fig. 3 dargestellt ist, werden die drei verdeckenden Lagergutbehälter 3V in ein Regalfach U1 eingelagert. Die Suche nach freien Lagerplätzen für die Umlagerung erfolgt dabei so, dass alle verdeckenden Lagergutbehälter 3V in ein gemeinsames Regalfach eingelagert werden. Ausgewählt unter mehreren möglichen Regalkanälen wird dann gemäß der kürzesten Entfernung vom aktuellen Referenzpunkt.

Nachdem die erste Umlagerung U1 durchgeführt wurde, wird als nächstes die in Fig. 3 mit U2 bezeichnete Umlagerung durchgeführt. Dies deshalb, da sich gesehen vom Standort U1 aus der Ort der nächsten erforderlichen Umlagerung A2 am nächsten am Standort U1 befindet.

Mit der Umlagerung U2 werden zwei verdeckende Lagergutbehälter vor dem Lagergutbehälter A2 entnommen und am Ort U2 gemeinsam in einen freien Regalkanal eingelagert.

Nachfolgend wird die Umlagerung U3 vorgenommen, in der ein verdeckender Lagergutbehälter umgelagert wird. Schließlich wird die Umlagerung U4 vorgenommen, bei der zwei verdeckende Lagergutbehälter vor dem Lagergutbehälter A3 entnommen und am Ort U4 eingelagert werden. Die Suche nach einem Umlagerplatz für die jeweils aufgenommenen verdeckenden Lagergutbehälter ist jeweils mit einem gestrichelten Kreis symbolisiert, der die Suche nach einem Umlagerplatz in der kürzest möglichen Entfernung symbolisiert.

Nach Abschluss aller Umlagerungen, können dann die Lagergutbehälter A3, A4, A2 und A1 auf das Lastaufnahmemittel aufgenommen und ausgelagert werden. Dies erfolgt dann wieder entsprechend der kürzest möglichen Entfernung zwischen den einzelnen Auslagerpunkten. Nach der Umlagerung U4 befindet sich das Regalbediengerät also nahe am Lagergutbehälter A3, entsprechend der jeweils kürzesten Entfernung wird dann der Lagergutbehälter A4, dann der Lagergutbehälter A2 und schließlich der Lagergutbehälter A1 aufgenommen.

Bei einer von der Basisstrategie abweichenden ersten Umlagerstrategie wird im Rahmen der Umlagerung nicht nach freien Regalkanälen gesucht, die alle umzulagernden und somit verdeckenden Lagergutbehälter gleichzeitig aufnehmen können, sondern es wird der nächstgelegene Regalkanal gesucht, der durch die Aufnahme der umzulagernden Behälter voll wird. Dieser Regalkanal muss vor Beginn der Umlagerung nicht leer sein.

Ziel dieser ersten Umlagerstrategie ist es, für die folgenden Einlagerungen immer ausreichend vollständig leere Regalkanäle bereitstellen zu können. Ein Nachteil ist, dass bei den nachfolgenden Auslagerungen potentiell zusätzliche Umlagerungen generiert werden.

Eine Variante dieser ersten Umlagerstrategie liegt noch darin, dass das nächstgelegene Regalfach gesucht wird, dass alle umzulagernden Behälter aufnehmen kann, durch die Aufnahme aber nicht voll werden muss. Auch dieses Regalfach muss vor Beginn der Umlagerung nicht leer sein. Diese Strategie führt zu verteilten Einlagerungen, da bei entsprechend hohem Lagerfüllgrad die Wahrscheinlichkeit von komplett leeren Regalflächern oder Regalkanälen relativ gering ist.

Eine Entscheidung zwischen den beiden beschriebenen Varianten der ersten Umlagerstrategie kann in Abhängigkeit eines Lagerfüllgrades getroffen werden.

Eine zweite Umlagerstrategie besteht bei dem erfindungsgemäßen Verfahren darin, dass bei der Bearbeitung der letzten erforderlichen Umlagerung der verdeckende Lagergutbehälter und der auszulagernde Lagergutbehälter gemeinsam auf das Lastaufnahmemittel aufgenommen werden. Dadurch findet die letzte erforderliche Umlagerung und die erste Auslagerung gleichzeitig statt. Dies wird aber nur dann durchgeführt, wenn bei der Bearbeitung der letzten Umlagerung ein nahegelegenes freies Regalfach zum Einlagern der verdeckenden Lagergutbehälter auf der, dem auszulagernden Lagergutbehälter gegenüberliegenden Regalseite vorhanden ist. Nur in diesem Fall können der oder die verdeckenden Lagergutbehälter und der auszulagernde Lagergutbehälter gleichzeitig auf das Lastaufnahmemittel aufgenommen werden und der oder die verdeckenden Lagergutbehälter können dann auf der gegenüberliegenden Regalseite wieder eingelagert werden. Die Suche nach einem freien Lagerplatz für die verdeckenden Lagergutbehälter erfolgt unter Berücksichtigung der kürzesten Entfernung, wobei das Zielfach nicht voll werden muss. Es kann hierbei auch ein Grenzwert für die Entfernung des Lagerfachs für die verdeckenden Lagergutbehälter gesetzt werden, so dass dann, wenn das auf der gegenüberliegenden Regalseite liegende Regalfach zur Aufnahme der verdeckenden Lagergutbehälter zu weit entfernt ist, auf die Durchführung dieser Strategie verzichtet wird.

Nach Aufnahme des ersten auszulagernden Lagergutbehälters und Abgabe der verdeckenden Lagergutbehälter fährt das Regalbediengerät dann die weiteren verbliebenen Auslagerpunkte an.

Eine dritte Umlagerstrategie sieht vor, mehrere Umlagerungen von verdeckenden Lagergutbehältern zu bündeln und also zunächst mehrere verdeckende Lagergutbehälter gemeinsam auf das Lastaufnahmemittel aufzunehmen und dann wieder gemeinsam in einen Regalkanal einzulagern. Das Lastaufnahmemittel soll dabei vollständig mit verdeckenden Lagergutbehältern aus mehreren Auslagefächern belegt sein. Es dürfen aber keine verdeckenden Lagergutbehälter vor einem auszulagernden Lagergutbehälter im Auslagerfach belassen werden.

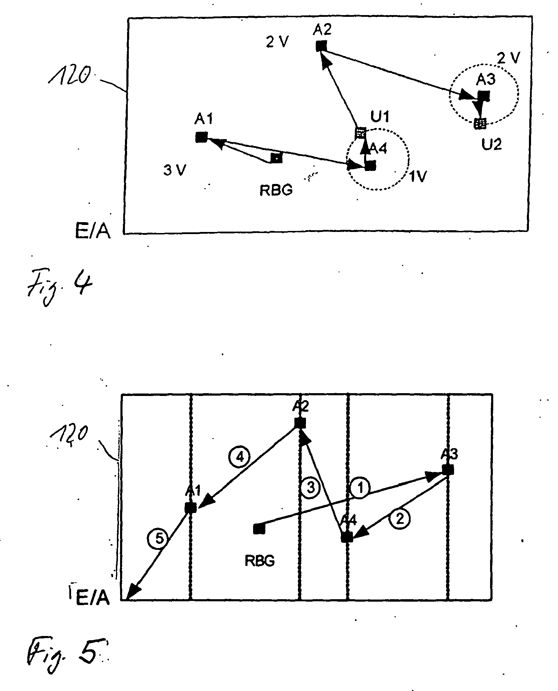

Die Darstellung der Fig. 4 verdeutlicht diese dritte Umlagerstrategie. Im Hochregallager 120 sollen die Lagergutbehälter A1, A2, A3 und A4 ausgelagert werden. Der Lagergutbehälter A1 ist von drei Lagergutbehältern 3V verdeckt, der Lagergutbehälter A4 ist von einem Lagergutbehälter 1 V verdeckt. Der Lagergutbehälter A2 ist von zwei Lagergutbehältern 2V verdeckt und der Lagergutbehälter A3 ist von zwei Lagergutbehältern 2V verdeckt. Die maximale Aufnahmekapazität des Lastaufnahmemittels beträgt vier Lagergutbehälter. Gemäß der dritten Umlagerstrategie fährt das Regalbediengerät RBG zunächst an den Regalkanal, in dem sich der Lagergutbehälter A1 befindet und nimmt die drei verdeckenden Lagergutbehälter 3V auf. Mit diesen drei verdeckenden Lagergutbehältern 3V fährt das Regalbediengerät dann zu dem Regalkanal, in dem sich der Lagergutbehälter A4 befindet und nimmt den einen Lagergutbehälter 1V auf. Das Lastaufnahmemittel ist dann vollständig mit vier verdeckenden Lagergutbehältern belegt. Ausgehend vom Regalkanal bei A4 wird dann ein vollständig leerer Regalkanal U1 gesucht, in den die vier verdeckenden Lagergutbehälter gemeinsam eingelagert werden können. Unter mehreren möglichen freien Regalkanälen wird dabei der Regalkanal ausgewählt, der die kürzeste Entfernung zum aktuellen Referenzpunkt, also dem Standort des Regalbediengeräts RBG, aufweist.

Nach dem Abgeben der vier verdeckenden Lagergutbehälter bei U1 ist das Lastaufnahmemittel wieder leer und fährt zu A2, um dort zwei verdeckende Lagergutbehälter 2V aufzunehmen. Anschließend werden bei A3 zwei weitere verdeckende Lagergutbehälter 2V aufgenommen. Das Lastaufnahmemittel ist dann wieder vollständig mit vier verdeckenden Lagergutbehältern belegt, die dann bei U2 in einen vollständig leeren Regalkanal eingelagert werden.

Die Auslagerung erfolgt dann gemäß der Reihenfolge A3, A4, A2, A1 zum Einlager/Auslagerübergabeplatz E/A.

Mit dieser dritten Umlagerstrategie kann die Anzahl der notwendigen Fahrbefehle und damit die Anzahl der erforderlichen Zyklen des Lastaufnahmemittels reduziert werden.

Bei einer Basisstrategie Auslagerung ist der Ausgangspunkt zunächst, dass kein auszulagernder Lagergutbehälter mehr von einem anderen Lagergutbehälter verdeckt ist. Die einzige Ausnahme stellt der bereits erläuterte Spezialfall dar, dass ein verdeckender Lagergutbehälter gleichzeitig mit dem auszulagernden Lagergutbehälter aufgenommen wird, wenn in kurzer Entfernung auf der gegenüberliegenden Regalseite ein Lagerfach für den verdeckenden Lagergutbehälter frei ist.

Anhand der Fig. 5 soll die Basisstrategie beim Auslagern erläutert werden.

Der erste anzufahrende Auslagerpunkt ist dabei derjenige, der am weitesten vom Auslagerstich E/A entfernt ist. Die Reihenfolge der Abarbeitung aller weiteren Auslagerungen wird dann dynamisch in Abhängigkeit vom aktuellen Standort des Regalbediengeräts auf Basis der jeweils kürzesten Entfernung zur nächsten Auslagerung ermittelt.

Das Regalbediengerät RBG im Hochregallager 120 bewegt sich gemäß dem Pfeil 1 somit zunächst zum Lagergutbehälter A3, da dieser am weitesten entfernt vom Auslagerstich E/A ist. Gemäß dem Pfeil 2 verfährt das Regalbediengerät RWG dann zum Lagergutbehälter A4, gemäß dem Pfeil 3 dann zum Lagergutbehälter A2 und schließlich gemäß dem Pfeil 4 zum Lagergutbehälter A1. Das Lastaufnahmemittel ist dann vollständig mit den auszulagernden Lagergutbehältern A1, A2, A3, und A4 gefüllt und bewegt sich schließlich gemäß dem Pfeil 5 zum Auslagerstich E/A.

Eine erste Auslagerstrategie, die sich von der Basisstrategie unterscheidet, besteht in der Aufnahme der auszulagernden Behälter in einer vorgegebenen Reihenfolge oder vorgegebenen Ordnung, beispielsweise schwer vor leicht oder hoch vor niedrig.

Eine zweite Auslagerstrategie hat das Ziel, eine möglichst kurze Gesamtfahrzeit und damit den kürzest möglichen Regalbediengerätauslagerzyklus zu erreichen. Hierbei wird ausgehend vom aktuellen Standpunkt des Regalbediengeräts, der als Referenzpunkt gewählt wird, eine Fahrtzeit für jede mögliche Auslagerreihenfolge ermittelt. Dies geschieht dadurch, dass eine Matrix mit den Fahrzeiten zwischen den verschiedenen Auslagerpunkten erstellt wird. Dann werden anhand dieser Matrix die Gesamtfahrzeiten für alle unterschiedlichen Kombinationen berechnet. Gewählt wird dann diejenige Auslagerreihenfolge, die die kürzeste Gesamtfahrzeit ermöglicht.

Eine dritte Auslagerstrategie sieht eine vordefinierte Reihenfolge beim Auslagern vor. Auf diese Weise kann beispielsweise eine Sortierung nach vorliegenden Aufträgen erfolgen. Wenn beispielsweise zwei auszuführende Aufträge vorliegen, die jeweils das Auslagern zweier bestimmter Lagergutbehälter betreffen, so werden die Lagergutbehälter entsprechend den vorliegenden Aufträgen auf dem Lastaufnahmemittel sortiert, was selbstverständlich durch die Auswahl der Reihenfolge der einzelnen Auslagerungen erfolgt. Eine Sortierung zwischen den jeweils vorliegenden Aufträgen kann dabei zufällig erfolgen oder unter Berücksichtigung eines Fahrwegs des Regalbediengeräts, dass also wieder mit der Auslagerung begonnen wird, die am weitesten entfernt vom Auslagerstich ist und dann den Aufträgen entsprechend die weiteren Auslagerungen vorgenommen werden.

Eine solche Sortierung der Auslagerungen nach Aufträgen zieht eine Leistungsminderung der Förderanlage nach sich, die aber durch Einsparungen stromabwärts des Auslagerstichs gegebenenfalls kompensiert werden kann.

## Patentansprüche

1. Verfahren zum Betreiben einer Förderanlage mit einem Regalbediengerät (RBG), wobei das Regalbediengerät (RBG) ein Lastaufnahmemittel zum Aufnehmen und Abgeben von Lagergutbehältern (A1, A2, A3, A4) aufweist, **dadurch gekennzeichnet, dass** ein Regal (120) mit wenigstens zwei in Einlager- beziehungsweise Auslagerrichtung hintereinander angeordneten Lagerplätzen (1L, 2L, 1 R, 2R) vorgesehen ist und dass das Einlagern, Umlagern und Auslagern von Lagergutbehältern (A1, A2, A3, A4) als voneinander getrennte Teilprozesse behandelt werden und für jeden dieser Teilprozesse separate Prozessabläufe vorgebbar sind.

2. Verfahren zum Betreiben einer Förderanlage nach Anspruch 1, **dadurch gekennzeichnet, dass** beim Einlagern Einlagerplätze gewählt werden, die die kürzeste Entfernung von einem Referenzpunkt aufweisen, wobei der Referenzpunkt wahlweise im Bereich eines Einlagerübergabeplatzes (E/A) oder am Regalbediengerät (RBG) angeordnet ist.

3. Verfahren nach Anspruch 1 oder 2, **dadurch gekennzeichnet, dass** beim Einlagern mehrerer, sich gleichzeitig auf dem Lastaufnahmemittel befindlicher Lagergutbehälter (A1, A2, A3, A4) zunächst nach einem Regalfach gesucht wird, das Platz für alle Lagergutbehälter (A1, A2, A3, A4) gemeinsam bietet, dann nach Regalfächern, die für jeweils gleich hohe Lagergutbehälter (A1, A2, A3, A4) einen gemeinsamen Lagerplatz bieten und zuletzt nach Einzellagerplätzen für die Lagergutbehälter (A1, A2, A3, A4).

4. Verfahren nach einem der vorstehenden Ansprüche, **dadurch gekennzeichnet, dass** bei der Suche von Lagerplätzen (1L, 2L, 1 R, 2R) eine Fahrzeit des Regalbediengeräts (RBG) vom Referenzpunkt zum Lagerplatz (1 L, 2L, 1 R, 2R) berücksichtigt wird.

5. Verfahren nach einem der vorstehenden Ansprüche, **dadurch gekennzeichnet, dass** auf dem Regalbediengerät (RBG) befindliche Lagergutbehälter (A1, A2, A3, A4) gleicher Höhe auf der gleichen Regalseite abgesetzt werden.

6. Verfahren nach einem der vorstehenden Ansprüche, **dadurch gekennzeichnet, dass** erst nach vollständigem Abschluss des Einlagerns ein eventuell erforderliches Umlagern durchgeführt wird.

7. Verfahren nach einem der vorstehenden Ansprüche, **dadurch gekennzeichnet, dass** beim Umlagern alle einen auszulagernden Lagergutbehälter (A1, A2, A3, A4) im Regal verdeckende Lagergutbehälter (1V, 2V, 3V) gemeinsam in ein Regalfach umgelagert werden.

8. Verfahren nach einem der vorstehenden Ansprüche, **dadurch gekennzeichnet, dass** beim Umlagern Lagergutbehälter (1V, 2V, 3V), die mehrere auszulagernde Lagergutbehälter (A1, A2, A3, A4) verdecken, zunächst gemeinsam auf das Lastaufnahmemittel aufgenommen und umgelagert werden, bevor die auszulagernden Lagergutbehälter (A1, A2, A3, A4) gemeinsam auf das Lastaufnahmemittel aufgenommen werden.

9. Verfahren nach einem der vorstehenden Ansprüche, **dadurch gekennzeichnet, dass** beim Umlagern Lagergutbehälter (1V, 2V, 3V), die auszulagernde Lagergutbehälter (A1, A2, A3, A4) verdecken, so in Umlagerplätze eingelagert werden, dass ein für das Umlagern benutztes Regalfach vollständig gefüllt ist.

10. Verfahren nach einem der vorstehenden Ansprüche, **dadurch gekennzeichnet, dass** beim Umlagern Lagergutbehälter (1V, 2V, 3V), die auszulagernde Lagergutbehälter (A1, A2, A3, A4) verdecken, in Regalfächer eingelagert werden, die den jeweils geringsten Abstand vom Auslagerfach aufweisen.

11. Verfahren nach einem der vorstehenden Ansprüche, **dadurch gekennzeichnet, dass** beim Umlagern Lagergutbehälter (1V, 2V, 3V), die auszulagernde Lagergutbehälter (A1, A2, A3, A4) verdecken, und auszulagernde Lagergutbehälter (A1, A2, A3, A4) gleichzeitig mit dem Lastaufnahmemittel aufgenommen werden, vorausgesetzt, dass auf der dem Auslagerplatz gegenüberliegenden Regalseite ein Regalfach zum gleichzeitigen Aufnehmen aller verdeckenden Lagergutbehälter (1V, 2V 3V) frei ist.

12. Verfahren nach einem der vorstehendenAnsprüche, **dadurch gekennzeichnet, dass** beim Auslagern zunächst ein von einem Referenzpunkt am weitesten entfernter Auslagerplatz angefahren wird und dann in der Reihenfolge der Entfernung vom Referenzpunkt weitere Auslagerungen erfolgen, wobei vom Referenzpunkt weiter entfernte Auslagerplätze zuerst angefahren werden.

13. Verfahren nach einem der vorstehenden Ansprüche, **dadurch gekennzeichnet, dass** beim Auslagern Auslagerplätze in einer zufälligen Reihenfolge angefahren werden.

14. Verfahren nach einem der vorstehenden Ansprüche, **dadurch gekennzeichnet, dass** beim Auslagern eine Fahrtzeit des Regalbediengeräts (RBG) vom Referenzpunkt zu den einzelnen Auslagerplätzen und zwischen den einzelnen Auslagerplätzen berücksichtigt wird.

15. Verfahren nach einem der vorstehenden Ansprüche, **dadurch gekennzeichnet, dass** beim Auslagern eine feste, vorgegebene Reihenfolge der Auslagerungen abgearbeitet wird, wobei die feste Reihenfolge von einer Steuereinheit vorgegeben wird.

## Claims

1. Method for operating a conveyor system with a storage/retrieval unit (SRU), said storage/retrieval unit (SRU) having a load-bearing means for picking up and putting down material containers (A1, A2, A3, A4), **characterized in that** a shelf (120) with at least two storage spaces (1L, 2L, 1 R, 2R) arranged one behind the other in the storage and/or retrieval direction is provided and **in that** the storage, transfer and retrieval of material containers (A1, A2, A3, A4) are treated as separate partial processes and separate process sequences can be specified for each of these partial processes.

2. Method for operating a conveyor system according to Claim 1, **characterized in that** storage spaces are selected during storage that have the shortest distance from a reference point, said reference point being arranged optionally in the area of an storage transfer point (E/A) or at the storage/retrieval unit (SRU).

3. Method according to Claim 1 or 2, **characterized in that** during storage of several material containers (A1, A2, A3, A4) simultaneously located on the load-bearing means, a search is made first for a shelf bay that offers space for all material containers (A1, A2, A3, A4) together, then for shelf bays offering a common storage space for material containers (A1, A2, A3, A4) of equal height and finally for individual storage spaces for the material containers (A1, A2, A3, A4).

4. Method according to one of the preceding claims, **characterized in that** during the search for storage spaces (1L, 2L, 1R, 2R) a travelling time of the storage/retrieval unit (SRU) from the reference point to the storage space (1 L, 2L, 1 R, 2R) is taken into account.

5. Method according to one of the preceding claims, **characterized in that** material containers (A1, A2, A3, A4) of equal height located on the storage/retrieval unit (SRU) are set down on the same shelf side.

6. Method according to one of the preceding claims, **characterized in that** any transfer which may be necessary is not performed until after completion of the storage.

7. Method according to one of the preceding claims, **characterized in that** during transfer all material containers (1V, 2V, 3V) in the shelf concealing a material container (A1, A2, A3, A4) to be removed are jointly transferred to a shelf bay.

8. Method according to one of the preceding claims, **characterized in that** during transfer material containers (1V, 2V, 3V) concealing several material containers (A1, A2, A3, A4) to be removed are first jointly picked up and transferred by the load-bearing means before the material containers (A1, A2, A3, A4) to be removed are jointly picked up by the load-bearing means.

9. Method according to one of the preceding claims, **characterized in that** during transfer material containers (1V, 2V, 3V) concealing material containers (A1, A2, A3, A4) to be removed are placed into transfer spaces such that a shelf bay used for the transfer is completely filled.

10. Method according to one of the preceding claims, **characterized in that** during transfer material containers (1V, 2V, 3V) concealing material containers (A1, A2, A3, A4) to be removed are placed into shelf bays having the shortest distance in each case from the retrieval bay.

11. Method according to one of the preceding claims, **characterized in that** during transfer material containers (1V, 2V, 3V) concealing material containers (A1, A2, A3, A4) to be removed and material containers (A1, A2, A3, A4) to be removed are picked up simultaneously using the load-bearing means, provided that on the shelf side opposite the retrieval space a shelf bay is free for simultaneous receipt of all concealing material containers (1V, 2V 3V).

12. Method according to one of the preceding claims, **characterized in that** during retrieval first a retrieval space furthest distant from a reference point is approached and then further retrievals take place in the sequence of their distance from the reference point, with retrievals further distant from the reference point being approached first.

13. Method according to one of the preceding claims, **characterized in that** retrieval spaces are approached in a random sequence during retrieval.

14. Method according to one of the preceding claims, **characterized in that** during retrieval a travelling time of the storage/retrieval unit (SRU) from the reference point to the individual retrieval spaces and between the individual retrieval spaces is taken into account.

15. Method according to one of the preceding claims, **characterized in that** during retrieval a fixed and predetermined sequence of retrievals is completed, the fixed sequence being predetermined by a control unit.

## Revendications

1. Procédé d'exploitation d'une installation de convoyage avec un transstockeur (RBG), sachant que le transstockeur (RBG) présente un dispositif de levage de charge pour prendre et déposer des conteneurs de marchandises (A1, A2, A3, A4), **caractérisé en ce qu'**est prévu un rayonnage (120) avec au moins deux emplacements de stockage (1L, 2L, 1 R, 2R) disposés l'un derrière l'autre dans le sens de mise en stock ou de déstockage, que la mise en stock, le déstockage et le déplacement des conteneurs de marchandises (A1, A2, A3, A4) sont traités comme des processus partiels indépendants les uns des autres, et que des procédures séparées peuvent être prédéterminées pour chacun de ces processus partiels.

2. Procédé d'exploitation d'une installation de convoyage selon la revendication 1, **caractérisé en ce que**, lors de la mise en stock, sont sélectionnés des emplacements de stockage qui sont le moins éloignés d'un point de référence, le point de référence étant disposé soit dans la zone d'un emplacement de transfert pour stockage (E/A), soit sur le transstockeur (RGB).

3. Procédé selon la revendication 1 ou 2, **caractérisé en ce que**, lors de la mise en stock de plusieurs conteneurs de marchandises (A1, A2, A3, A4) se trouvant simultanément sur le dispositif de levage de charge, est tout d'abord cherché un rayon offrant suffisamment de place pour tous les conteneurs de marchandises (A1, A2, A3, A4), puis des rayons offrant un emplacement commun pour des conteneurs de marchandises (A1, A2, A3, A4) respectivement de même hauteur, et enfin des emplacements individuels pour les conteneurs de marchandises (A1, A2, A3, A4).

4. Procédé selon l'une des revendications précédentes, **caractérisé en ce qu'**un temps de déplacement du transstockeur (RBG) entre le point de référence et l'emplacement de stockage (1L, 2L, 1R, 2R) est pris en compte lors de la recherche des emplacements de stockage (1L, 2L, 1 R, 2R).

5. Procédé selon l'une des revendications précédentes, **caractérisé en ce que** les conteneurs de marchandises (A1, A2, A3, A4) de même hauteur se trouvant sur le transstockeur (RBG) sont déposés du même côté du rayonnage.

6. Procédé selon l'une des revendications précédentes, **caractérisé en ce qu'**un déplacement éventuellement nécessaire des conteneurs dans le stock est réalisé seulement lorsque la mise en stock est complètement terminée.

7. Procédé selon l'une des revendications précédentes, **caractérisé en ce que**, lors du déplacement de conteneurs dans le stock, tous les conteneurs de marchandises (1V, 2V, 3V) cachant un conteneur de marchandises (A1, A2, A3, A4) à déstocker dans le rayonnage sont transférés tous ensemble dans un rayon.

8. Procédé selon l'une des revendications précédentes, **caractérisé en ce que**, lors du déplacement dans le stock, des conteneurs de marchandises (1V, 2V, 3V) cachant plusieurs conteneurs de marchandises à déstocker (A1, A2, A3, A4), sont tout d'abord pris et déplacés ensemble avec le dispositif de levage de charge, avant que les conteneurs de marchandises à déstocker (A1, A2, A3, A4) soient sortis ensemble sur le dispositif de levage de charge.

9. Procédé selon l'une des revendications précédentes, **caractérisé en ce que**, lors du déplacement dans le stock, des conteneurs de marchandises (1V, 2V, 3V) cachant des conteneurs de marchandises à déstocker (A1, A2, A3, A4) sont placés de telle manière dans des emplacements de transfert qu'un rayon utilisé pour le déplacement est complètement rempli.

10. Procédé selon l'une des revendications précédentes, **caractérisé en ce que**, lors du déplacement dans le stock, des conteneurs de marchandises (1V, 2V, 3V) cachant des conteneurs de marchandises à déstocker (A1, A2, A3, A4) sont placés dans des rayons qui sont respectivement les moins éloignés du rayon de déstockage.

11. Procédé selon l'une des revendications précédentes, **caractérisé en ce que**, lors du déplacement dans le stock, des conteneurs de marchandises (1V, 2V, 3V) cachant plusieurs conteneurs de marchandises à déstocker (A1, A2, A3, A4) et des conteneurs de marchandises à déstocker (A1, A2, A3, A4) sont saisis simultanément avec le dispositif de levage de charge, à condition qu'un rayon pouvant accueillir simultanément tous les conteneurs de marchandises (1V, 2V, 3V) cachant les conteneurs à déstocker soit disponible dans le rayonnage se trouvant en face de l'emplacement de déstockage.

12. Procédé selon l'une des revendications précédentes, **caractérisé en ce que**, lors du déstockage, un emplacement de déstockage le plus éloigné d'un point de référence est approché en premier, et que les autres emplacements de déstockage sont ensuite approchés dans l'ordre d'éloignement par rapport au point de référence, sachant que les emplacements de déstockage les plus éloignés du point de référence sont approchés en premier.

13. Procédé selon l'une des revendications précédentes, **caractérisé en ce que**, lors du déstockage, les emplacements de déstockage sont approchés dans un ordre aléatoire.

14. Procédé selon l'une des revendications précédentes, **caractérisé en ce qu'**un temps de déplacement du transstockeur (RBG) depuis le point de référence et jusqu'aux différents emplacements de déstockage et entre les différents emplacements de déstockage est pris en compte lors du déstockage.

15. Procédé selon l'une des revendications précédentes, **caractérisé en ce que**, lors du déstockage, un ordre de traitement fixe et prédéterminé des déstockages est exécuté, sachant que l'ordre fixe est prédéterminé par une unité de commande.
